# FASCICULE DE BREVET EUROPEEN

(11) **EP 0 572 323 B1**
(45) Date de publication et mention de la délivrance du brevet: **09.08.1995**
(21) Numéro de dépôt: 93401356.6
(22) Date de dépôt: 27.05.1993
(51) Int. Cl.: G01B 11/04

(54) **Dispositif de mesure de longueur de produits longs en défilement**
Längenmesseinrichtung für langgestreckte sich bewegende Objekte
Length-measuring device for elongated moving objects

(30) Priorité: 27.05.1992 FR 9206521
(43) Date de publication de la demande: 01.12.1993
(73) Titulaire: Deflou, Michel, F-95130 le Plessis Bouchard (FR)
(72) Inventeur: Deflou, Michel, F-95130 le Plessis Bouchard (FR)
(74) Mandataire: Schmit, Christian Norbert Marie

(56) Documents cités:
- EP-A- 0 203 010
- EP-A- 0 457 739
- FR-A- 2 463 401

## Description

La présente invention a pour objet un dispositif de mesure de longueur de produits longs en défilement. Elle est plus particulièrement utilisable dans l'industrie des câbles ou des tuyaux, mais elle peut également être utilisée dans le domaine des revêtements de sol, pour la mesure de la longueur de nappes de revêtement fabriquées par des machines. Par exemple, elle peut ainsi servir à mesurer des longueurs de moquette. Elle peut être utilisée également dans la métallurgie, dans les tréfileries, et plus généralement pour la mesure d'un objet long quelconque présentant à un stade de sa fabrication un défilement devant un dispositif de mesure.

Les dispositifs connus de mesure de produits longs en défilement, qui comportent généralement des compteurs, n'offrent pas de précision meilleure que quelques pourcent ni, surtout, une fidélité suffisante pour une correction systématique de l'erreur. De ce fait, les producteurs, qui fabriquent des grandes longueurs sur des lignes de production continues, ne peuvent pas maîtriser les suppléments de longueur délivrés gratuitement à leurs clients. Un meilleur contrôle de la précision de longueur peut se traduire immédiatement par une augmentation directe de la productivité et du gain.

Notamment la précision du comptage métrique est recherchée depuis longtemps par les fabricants de câbles électriques. En effet, la réalisation d'un câble électrique nécessite de nombreuses opérations successives. Plus les opérations sont proches du stade final, plus les pertes par surlongueur sont onéreuses. Dans le domaine de la fabrication des tubes en matière plastique, les produits sont généralement distribués en couronne de longueur de 25, 50 et 100 mètres. Sur ces produits de faible valeur ajoutée, l'intérêt économique de la précision n'est pas négligeable. Pour ce même domaine, l'évolution des techniques de construction des maisons implique maintenant la réalisation préalable d'écheveaux de gaines électriques, à répartir dans les dalles et les murs des maisons au moment du coulage du béton. Chaque brin de l'écheveau doit être mesuré avec précision pour éviter de livrer, par précaution, des longueurs bien trop grandes par rapport à la commande effectuée par le client.

Les compteurs de longueur les plus couramment utilisés comportent un ensemble de roues, ou de bandes continues, maintenues en contact avec le produit à mesurer, comme par exemple décrit dans le document EP-A-0 457 739. Le maintien au contact est exercé par un système élastique de compression. Ceci permet la mesure de produits de différentes sections et de différentes épaisseurs. La mesure se réalise en comptabilisant les rotations du système entraîné par friction avec le produit à mesurer. On constate que la précision de ces dispositifs est comprise entre 2 et 3 %. Cependant cette précision dépend essentiellement des coefficients de frottement des matériaux en contact (les roues et bandes du système et le produit à mesurer), du rendement mécanique du système, des forces de serrage pouvant être acceptées par le produit à mesurer, et de la déformation des matériaux en contact (système et produit à mesurer). Il apparaît alors que du fait de la diversité très grande des besoins, le réglage de ces différents paramètres n'est optimal que pour un des produits à mesurer, pas pour les autres. Il en résulte que les appareils actuellement commercialisés fournissent des précisions variables, et non répétitives, en fonction des produits, de leur dimension, et de leur résistance à l'écrasement. En pratique la précision est aléatoire et seule la précision moyenne du système est de l'ordre de 3 %. L'erreur pouvant aller de 1 % à 10 % dans les pires cas.

L'invention a pour but de remédier à ces inconvénients en limitant les causes les plus importantes des défauts de fidélité. Ces causes sont essentiellement liées au frottement du système de mesure sur le produit. Dans l'invention ce frottement est très léger, des index légers emmenés par le produit en défilement, exercent un effort faible de contact sur ce produit. Dans l'invention la friction de ces index ne sert pas à faire avancer le dispositif de mesure. Dans un perfectionnement, un asservissement mesure l'avancement des index et provoque l'avancement du dispositif de mesure en correspondance. Compte tenu des différences de vitesse entre l'avancement des index de mesure et l'avancement du produit en défilement, les index sont, dans une variante, maintenus flottant dans le dispositif de mesure. Ce flottement permet de récupérer des différences de vitesse entre le dispositif et le produit. Par suite, plutôt que de compter le nombre de tours effectué par le dispositif de mesure on compte des durées écoulées entre le passage d'un index devant des bornes d'un jeu de bornes de détection. La distance entre les bornes étant connue cette durée permet de déterminer la vitesse avec laquelle d'une part on asservit le dispositif de mesure, et avec laquelle d'autre part on établit une mesure de longueur du produit long en défilement.

L'invention a donc pour objet dispositif de mesure de longueur de produits longs en défilement caractérisé en ce qu'il comporte
- un moyen pour entraîner des jalons en regard du produit en défilement, à la vitesse de défilement du produit,
- un jeu de bornes,
- un chronomètre pour repérer des dates de passage de ces jalons devant ces bornes,
- et un dispositif de conversion pour convertir une mesure de la durée séparant ces passages de ces jalons devant ces bornes en une mesure de longueur du produit qui défile.

L'invention sera mieux comprise à la lecture de la description qui suit à l'examen des figures qui l'accompagnent. Celles ci ne sont données qu'à titre indicatif et nullement limitatif de l'invention. Les figures montrent :
- figure 1 : un dispositif de mesure de longueur de produits en défilement conforme à l'invention ;
- figure 2 : des détails de réalisation du dispositif et une représentation schématique de la position des index ;
- figure 3 : le principe de la mesure effectuée avec le dispositif de l'invention.

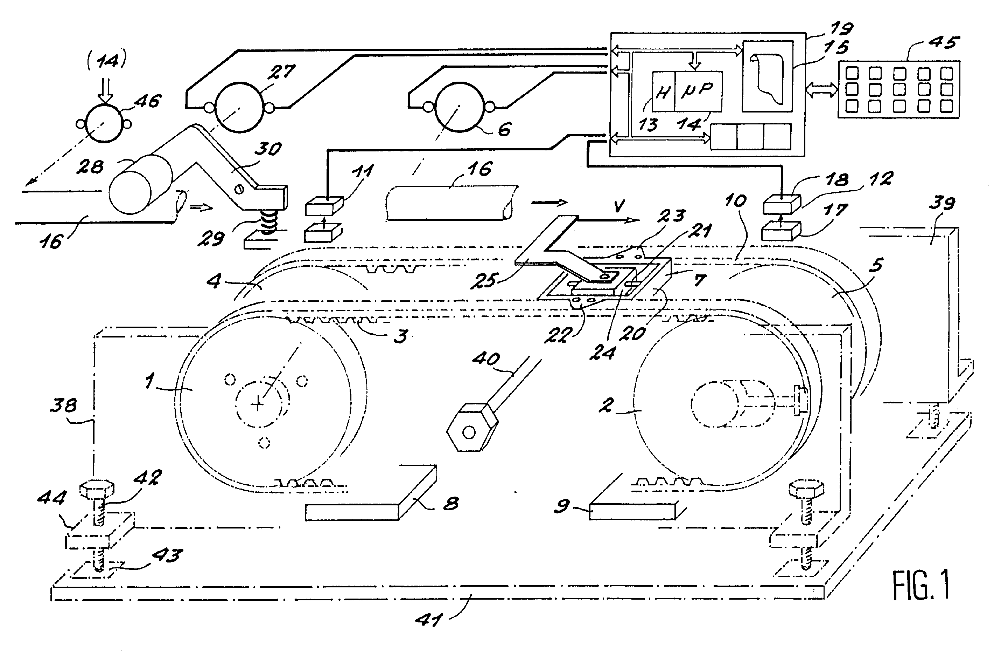

La figure 1 représente un dispositif de mesure de longueur de produits longs en défilement selon l'invention. Ce dispositif comporte comme moyen d'entraînement des jalons un carrousel constitué, dans l'exemple représenté, par au moins deux poulies crantées, les poulies 1 et 2, reliées entres elles par une courroie crantée 3. De préférence, pour des raisons de stabilité, on a doublé le jeu des poulies 1 et 2 par un deuxième jeu de poulies 4 et 5 montées parallèlement aux poulies 1 et 2 respectivement et reliées par une courroie crantées 10. Le carrousel est motorisé par un moteur 6 qui entraîne la poulie 1 et la poulie 4. Le carrousel représenté a ici la forme d'une ellipse plate. Il pourrait avoir une forme différente, par exemple triangulaire, si on avait rajouté une troisième poulie décalée entre les deux poulies 1 et 2.

Le carrousel porte des jalons 7, 8 et 9 fixés aux courroies crantées 3 et 10. Dans l'exemple préféré représenté on a montré trois jalons. Il peut bien entendu y en avoir plus, notamment pour des raisons de taille du dispositif. La distance entre les jalons est de préférence du même ordre qu'une distance D entre des bornes 11 et 12 d'un jeu de bornes de mesure. Mais ce n'est pas nécessaire On pourra montrer qu'on pourrait faire fonctionner le dispositif de l'invention avec seulement deux jalons, voire même un seul, mais que dans ce cas les risques d'erreur de mesure pourraient subvenir. Dans ces cas cependant on réduirait, conformément à l'invention, les défauts de fidélité de précision dues aux efforts de frottement contre le produit à mesurer. On expliquera par la suite pourquoi un nombre de jalons égal à trois est préféré. En pratique on mettra en pratique plus de jalons si le dispositif est moins long, si la distance D est petite.

Dans l'invention on utilise un chronomètre et un dispositif de conversion pour convertir une mesure de durée en une mesure de longueur qui défile. Dans la pratique le chronomètre est représenté par l'horloge 13 d'un microprocesseur 14. Le microprocesseur 14 exécute par ailleurs un programme de conversion stocké dans une mémoire 15. Chaque fois qu'un jalon, par exemple le jalon 7, passe devant la borne 11 puis la borne 12 le programme de la mémoire 15 prévoit de prendre en compte le temps d'horloge délivré par l'horloge 13. On dispose alors en pratique d'une mesure de la vitesse V de déplacement du jalon 7, égale à la vitesse V de déplacement du produit long 16 en défilement. Cette mesure de la vitesse est liée à la connaissance de l'espacement D résidant entre les bornes 11 et 12. Dans l'exemple représenté le produit en défilement 16 est un câble. Dans la pratique les bornes 11 et 12 sont tout simplement chacune des cellules photoélectriques comportant une diode électroluminescente 17 émettant une lumière en direction d'un photodétecteur 18. Le jalon 7 comporte un index qui vient masquer temporairement, au moment de son passage, la transmission de cette lumière. Cette rupture de transmission est détectée par le photodetecteur 18, et est transformée en un signal qui est reçu par le microprocesseur 14. Celui ci en déduit les instants de passage et donc en conséquence les durées, les vitesses, et les longueurs des produits en défilement.

Dans un perfectionnement de l'invention, les jalons sont maintenus flottants dans le carrousel. Un exemple de cette réalisation est montré sur la figure 1 où un jalon 7 est constitué par un chariot 20 comportant une cavité. Transversalement à cette cavité, on a fixé un axe de glissement 21. L'axe de glissement 21 est orienté, dans la cavité du chariot 20, parallèlement au sens de déplacement du jalon 7 avec le carrousel. Le chariot est par ailleurs maintenu aux courroies crantées 3 et 10 par des pattes 22 et 23 rivetées à ces courroies. Un coulisseau 24 est monté libre en coulissement le long de l'axe de coulissement 21. Le coulisseau 24 porte un index 25 . Celui-ci est, ici, une pièce métallique en forme de L majuscule. Une extrémité du pied de ce L est fixée, par exemple par rivetage sur le coulisseau 24. Par des pliures l'index 25 s'élève au-dessus du plan formé par les courroies 3 et 10. Ces pliures par effet élastique, viennent plaquer le mât de l'index 25 en forme de L sous le produit en défilement 16. L'effort élastique est faible. Par exemple l'élévation libre de l'index est de l'ordre de 0,5 centimètre et le maintien de l'index contre le produit fait descendre cet index d'environ 0,2 centimètre. L'index peut par ailleurs être remplacé par un petit plateau soutenu par un ressort qui serait porté par le coulisseau 24, de manière à ce que ce plateau jouant le rôle d'index vienne se plaquer en dessous du produit en défilement 16.

Le coulissement du coulisseau 1 sur l'axe 21 est libre, et le faible frottement de l'index 25 sous le produit 16 est suffisant pour faire voyager le coulisseau dans tout l'espace de la cavité du chariot 20. Dans un exemple le coulisseau à une longueur d'environ 2 cm et a une course possible de plus ou moins 2 cm de part et d'autre d'une position moyenne. Le poids du coulisseau 24 est très faible. Le coulisseau 24 est par exemple en matière plastique.

Etant donné que le coulisseau peut se mouvoir librement dans le chariot 20, le frottement de l'index 25 sous ou sur le produit 16 n'est pas destiné à entraîner le chariot 20. Pour entraîner ce chariot, on utilise au contraire des informations de vitesse résultant de la mesure du déplacement des index pour commander, avec le microprocesseur 14, le moteur 6 de façon à ce que le chariot 20 soit entraîné à une vitesse très proche de la vitesse V. En pratique on s'arrange pour que l'écart de vitesse, intégré pendant toute la durée de passage de l'index entre la borne 11 et la borne 12 soit inférieur à la tolérance de course (plus ou moins 2 cm) autorisée au coulisseau à l'intérieur du chariot 20. Au besoin on agrandira le chariot et la course possible du coulisseau pour que celui-ci ne vienne pas en butée du fait des écarts de vitesse.

Le principe de la mesure est la suivante. Quand le produit défile, la vitesse déduite des temps de passage des index 25 dans les bornes 11 et 12 sert à asservir, avec l'aide du microprocesseur 14, le moteur 6. Au moment du départ, compte tenu de ce que la vitesse mesurée est nulle, on peut utiliser un dispositif supplémentaire. Ce dispositif supplémentaire comporte par exemple une génératrice tachymétrique 27 entraînée par un patin roulant 28 qui roule par friction sur le produit 16. Le plaquage du patin 28 contre le produit en défilement 16 est assuré par un ressort 29 qui agit sur un bras de levier 30. Une fois que le démarrage a été effectué, par exemple une fois qu'un quelconque des chariots est passé en regard d'une borne puis d'une autre borne, on peut en déduire une vitesse et basculer l'asservissement, de la mesure tachymétrique à la mesure délivrée par le système constitué par les bornes 11 et 12, l'horloge 13, le microprocesseur 14 et le programme 15. Cependant il serait tout à fait possible de maintenir l'utilisation de la génératrice tachymétrique si celle-ci pouvait être assurée d'avoir un contact suffisamment fiable avec le produit pour que le flottement de l'index reste dans la tolérance. Dans tout les cas, il resterait que le moteur 6 serait asservi en vitesse, que l'index 25 serait flottant dans le chariot 20, et que ce serait le passage de l'index 25 devant les bornes 11 et 12 qui servirait à mesurer la longueur de produit en défilement.

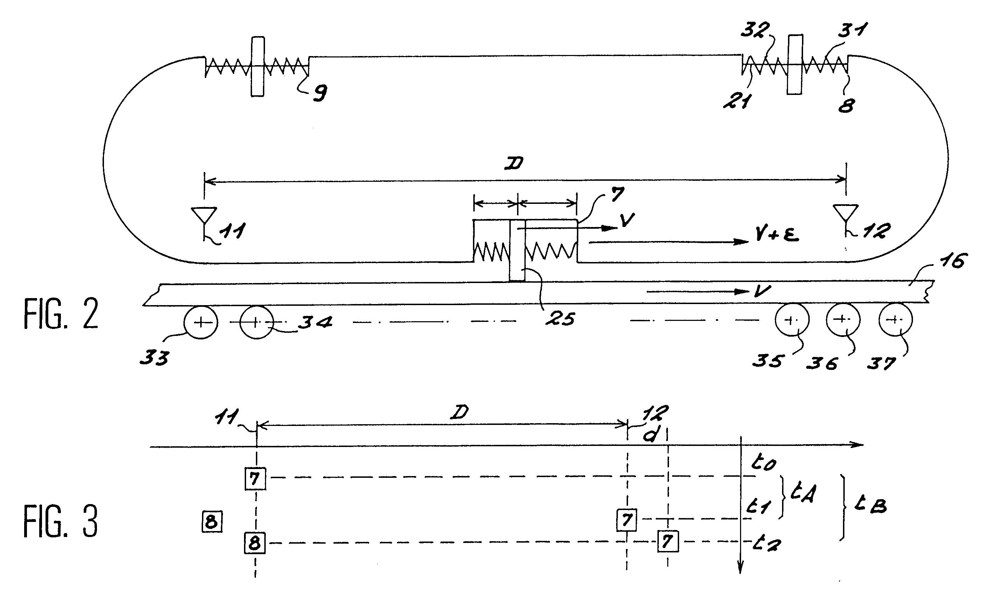

La figure 2 montre d'une manière schématique certaines particularités de l'invention. Le carrousel est montré par l'éllipse plate simulant par exemple la courroie crantée 3. Les trois jalons 7, 8 et 9 sont également représentés. L'index 25 du jalon 7 est en contact, supérieur cette fois, avec le produit 16 en défilement. Les index des jalons 8 et 9 occupent une position centrale à l'intérieur des cavités de leurs chariots respectifs. Ces positions centrales sont obtenues par présence de petits ressorts tels que 31 et 32, situés de part et d'autre du coulisseau 24 autour de l'arbre de coulissement 21. Les efforts exercés par ces ressorts 31, 32 sont très faibles compte tenu de la liberté de mouvement du coulisseau 24. Pour le jalon 7 on constate que la vitesse du carrousel est V + ε, supérieure à la vitesse V du produit 16 et de l'index 25. En conséquence l'index 25 recule petit à petit l'intérieur de la cavité du chariot qui le porte au fur et à mesure que ce chariot avance vers la borne 12.

On a également représenté les bornes 11 et 12 séparées par la distance D. Dans la représentation de la figure 2, qui est une solution préférée le produit en défilement est soutenu par un jeu de galets tels que 33 à 37 qui empêchent le fléchissement du produit 16 et assurent donc un bon contact de l'index 25 avec le produit sans nécessiter par ailleurs un trop gros effort de l'appui l'index 25.

Pour assurer la mise en contact de l'index 25 avec le produit 16, et pour tenir compte des variations d'épaisseur des produits à mesurer, tout le dispositif est maintenu entre deux plaques massives 38 et 39 (figure 1), par exemple en métal et reliées entres elles par des entretoises tels que 40. L'ensemble formé par le dispositif maintenu par les plaques constitue le bloc de mesure. Il est mobile en hauteur par rapport à un socle 41, par exemple au moyen de vis sans fin telles que 42 s'appuyant sur des patins 43 solidaires du socle 41 et tournant dans des écrous 44 solidaires des plaques 38 ou 39. Ce système peut bien entendu être remplacé par un système à levier ou bien, de préférence, par un système motorisé avec un moteur électrique ou hydraulique. Le réglage de la hauteur peut être fait à vue, en contrôlant la compression de l'index 25 contre le produit 16. De préférence, compte tenu de ce que le contact est assuré par le dessus (et non par le dessous comme montré sur la figure 1) le socle 41 porte le jeu des galets 33 à 37.

Le fonctionnement de l'invention va maintenant être expliqué en regard de la figure 3. On étudie deux jalons actifs, le jalon 7 et le jalon 8. Lorsque le jalon 7 passe devant la borne 11, on enregistre dans un registre du microprocesseur 14 un temps t₀. Cet enregistrement est possible parce que quand le jalon 7 passe devant la borne, celle ci envoie un signal au microprocesseur 14 qui, à ce moment prélève le temps t₀. Ce temps peut être matérialisé par l'état d'un compteur qui évolue au rythme de l'horloge. Puis le jalon 7 se déplace et vient passer devant la borne 12. A ce moment on enregistre dans un autre registre du microprocesseur 14 le temps t₁. La durée de t₀ à t₁ sera dite t_{A}. Dans le cas ou l'asservissement de vitesse a été fait par excès, et où la vitesse du chariot V + ε est supérieure à la vitesse V du produit à mesurer (ce qui est un cas préféré), le jalon 8 arrive devant la borne 11 après que le jalon 7 soit passé devant la borne 12. En conséquence le jalon 7 se trouve à une distance d de la borne 12 au moment t₂ où le jalon 8 arrive devant la borne 11. L'instant t₂ est également stocké dans un des registres du microprocesseur. La durée qui sépare les instants t₂ et t₀ est appelée t_{B}.

La contrainte voulant que l'asservissement soit toujours réglé par excès peut être remplacée par une disposition plus simple : dans celle ci la distance qui sépare sur le carrousel deux index l'un de l'autre et supérieure à la distance D (connue et tarée) qui sépare les deux bornes 11 et 12. Par exemple elle lui est supérieure de 3 ou 4 cm. On pourrait montrer par ailleurs que l'asservissement peut être réglé par défaut, ou même encore sans préférence, ou que, également, les distances qui séparent les jalons sont inférieures à la distance D. Ceci conduirait alors à des systèmes de remise à zéro des compteurs différents de celui qui va être écrit maintenant. En conséquence la description de la remise à zéro et de la comptabilisation des longueurs ne peut être considérée comme limitée à un cas où ces contraintes d'asservissement par excès, ou par défaut, et distances supérieures devraient être respectées.

On peut constater que la mesure de vitesse V du produit en défilement est apprécié très exactement entre l'instant t₀ et l'instant t₁. Cette vitesse est égale à D/t_{A}. Compte tenu de la faible distance parcourue en plus, d, par l'index 7 avant que l'index 8 ne vienne repérer l'instant t₂, on fait l'hypothèse, dans l'invention, que la vitesse s'est maintenue strictement égale pendant cette durée supplémentaire. En tout état de cause, même si ce n'est pas le cas, compte tenu du rapport des distances d/D et des variations faibles des vitesses, on obtient des erreurs de l'ordre de 0,05 pour mille. Par ailleurs, le but de l'asservissement est de faire en sorte que d soit le plus près possible de zéro. En pratique on obtient statistiquement pour d un écart limité à 1 mm, soit 2/1000 de la distance D. On peut raisonnablement estimer que la variation de vitesse sur 1 mm est très faible. Dans le cas où on aurait un seul jalon la distance d peut être plus forte, ce qui augmenterait les erreurs dues à ce choix sans remettre en cours cependant le principe de l'invention. En effet, en régime établi on ne constate pas d'erreur mesurable avec un seul jalon.

La distance D + d parcourue par l'index 25 est donc égale a V x t_{B}. Or V est elle-même égale à D/t_{A}. Donc la distance totale parcourue par l'index 25 est égale à D x t_{B}/t_{A}. On remarque par ailleurs que cette dernière formule est exacte, même si l'instant t₂ se produit avant l'instant t₁. L'idée de l'invention est alors dans ce cas que l'on compte les distances parcourues par chacun des index, jusqu'à ce qu'un index suivant vienne prendre le relais. C'est la raison pour laquelle en théorie, bien que cela serait peu pratique, on pourrait même imaginer n'avoir qu'un seul index. La distance parcourue par l'index 7 ainsi évaluée est gardée en mémoire dans la mémoire 15.

Dans un exemple de réalisation les roues crantées ont 44 dents et les courroies crantées ont 132 dents, exactement trois fois plus. Ceci conduit à placer trois jalons. Compte tenu de l'intérêt de mesurer la longueur sur une portion droite de la pseudo ellipse, et compte tenu du rapport du rayon des roues à la longueur des courroies le nombre de trois jalons s'impose. En pratique on prend de préférence une courroie dont la longueur est un multiple entier de la circonférence des roues. Le nombre des jalons est en correspondance. Ceci apporte un autre avantage. Pour fixer les chariots avec les pattes 22 et 23 sur les courroies, on renforce ces fixations avec des contreplaques. Ces contreplaques remplacent une dent à leur endroit sur la courroie. De préférence les roues crantées ont une dent enlevée à l'endroit ou ces contreplaques doivent s'engéner. Ceci justifie encore plus l'intérêt d'avoir un multiple entier. Même si par ailleurs ce n'est pas indispensable et si on pouvait imaginer d'avoir une courroie plate.

En pratique on choisit aussi des roues crantées de grand diamètre. Ceci s'explique pour la raison suivante. Si le diamètre de la roue est grand, compte tenu de la faible élévation de l'index 0,5 cm, la vitesse tangentielle de l'index, au point de contact avec le produit long en défilement, est très sensiblement égale à la vitesse tangentielle des roues, qui elle est strictement égale à la vitesse du carroussel. Ceici ne serait pas le cas si le diamètre des roues était faible. Et c'est la raison pour laquelle on s'efforcera aussi de prévoir une élévation de l'index la plus faible possible.

Puis la gestion de ce qui arrive au jalon 8 est effectuée de la même façon : l'instant t₂, relatif à l'historique du jalon 7 devient un instant t₀ relatif au jalon 8. Par ailleurs, le programme contenu dans la mémoire 15 possède une fonction d'accumulation qui permet d'additionner toutes les distances successives franchies par chacun des jalons. Lorsqu'on arrête le défilement du produit, il n'y a aucune raison pour que la distance à mesurer corresponde à un multiple entier, ou approchant, de la distance D. En conséquence, l'instant d'arrêt du défilement n'a aucune raison de tomber au moment d'un instant de type t0 ou t₁ ou t₂. On repère alors par rapport au dernier instant t₂ mesuré une durée dt. La longueur du produit qui a défilé est alors égale à la somme cumulée des longueurs élémentaires mesurées, augmentée du produit V x dt, V étant la dernière mesure de la vitesse de défilement du produit.

Lors du démarrage, pour simplifier l'opération, on recalera le dispositif de mesure de telle façon qu'un des index soit à une position prédéterminée en amont de la borne 11. Par exemple on peut s'arranger en débrayant le moteur 6 pour que le jalon 7 soit placé 2 cm en amont de la borne 11. Le démarrage se produit alors de la façon suivante. Au moyen d'un clavier 45 relié au microprocesseur 14, on commande le démarrage de défilement du produit. Par exemple un moteur 46 couplé au produit 16 et symboliquement représenté met en mouvement le début de ce défilement. Au démarrage, la génératrice tachymétrique 27 mesure la mise en route, et le microprocesseur 14 en application du programme 15 asservit la vitesse du moteur 6 à la vitesse du moteur 46. Le jalon 7, qui a été placé en amont de la borne 11 passe donc devant cette borne et on en mesure un instant t₀. Le défilement se poursuit jusqu'à ce que le jalon 7 passe devant la borne 12. A cet instant on se livre à deux opérations. Premièrement on dispose d'une première mesure de vitesse V = D/t_{A}. Donc on comptabilise déjà les vitesses et la distance parcourue comme précédemment (en ajoutant cette fois les 2 cm). Par ailleurs, connaissant la vitesse on bascule l'asservissement de vitesse avec la génératrice sur un asservissement de vitesse résultant de la mesure propre de la vitesse V. L'asservissement avec la génératrice tachymétrique peut être de type analogique, l'asservissement avec la vitesse V est un asservissement de type numérique. On remarque que si les problèmes de démarrage ne sont pas importants, en particulier lorsque que de très grandes distances sont calculées, que seule la précision de la mesure des distances est importante, et qu'on peut faire abstraction des défauts de démarrage, le lancement de l'appareil de mesure peut alors être procuré par tout autre dispositif, éventuellement même manuellement.

Le principe de l'invention consiste donc dans la pose en continu de repères légers (les jalons) sur la surface du produit à mesurer puis dans la mesure, sur une trajectoire de préférence rectiligne, de la vitesse par la position de ces repères entre deux points fixes séparés par une distance connue (où entre trois ou plusieurs points fixes séparés par des distances connues). La formule générale basée sur le rapport des temps t_{B}/t_{A} serait par ailleurs aussi valable si, au lieu d'utiliser des jalons, on marquait par des traits de peinture le produit à mesurer par endroits, et si on repérait le passage de ces marques devant une première puis une deuxième borne. On pourrait s'arranger, avec une connaissance même approximative de la vitesse de défilement, pour mettre en oeuvre la formule indiquée ci-dessus. Dans ce cas, "l'asservissement" serait immédiat puisque les marques très légères seraient portées directement par le produit. Comme cet asservissement serait parfait, il n'y aurait bien entendu plus besoin de flottement. En effet cela ne serait pas utile puisque les index colorés ou peints seraient fixes par rapport au produit.

## Revendications

1. Dispositif de mesure de longueur de produits longs en défilement caractérisé en ce qu'il comporte
- un moyen pour entraîner des jalons en regard du produit en défilement, sensiblement à la vitesse de défilement du produit,
- un jeu de bornes,
- un chronomètre pour repérer des dates de passage de ces jalons devant ces bornes,
- et un dispositif de conversion pour convertir une mesure de la durée séparant des passages de ces jalons devant ces bornes en une mesure de longueur du produit qui défile.

2. Dispositif selon la revendication 1, caractérisé en ce que
- le moyen pour entraîner comporte un carrousel motorisé,
- les jalons sont maintenus flottants dans le carrousel, et en ce que
- le moteur du carrousel est asservi en vitesse à la vitesse de défilement du produit.

3. Dispositif selon la revendication 2, caractérisé en ce que les jalons flottants comportent chacun un chariot fixé au carrousel, ce chariot étant muni d'un coulisseau qui coulisse dans le chariot dans un sens parallèle au sens de défilement du produit, et, monté souplement sur ce coulisseau, un index qui vient élastiquement au contact du produit en défilement, les temps de passage des index devant les bornes étant mesurés.

4. Dispositif selon l'une quelconque des revendications 2 ou 3, caractérisé en ce qu'il comporte
- des moyens pour maintenir élastiquement les jalons en flottement autour d'une position moyenne par rapport au carrousel.

5. Dispositif selon l'une quelconque des revendications 2 à 4, caractérisé en ce que l'asservissement du moteur du carrousel comporte un dispositif pour asservir au démarrage ce moteur par une génératrice tachymètrique en contact et entraînée par le produit qui défile, et un dispositif pour asservir ensuite ce moteur en fonction d'une mesure de la vitesse de défilement des jalons flottants déduite de la mesure de durée.

6. Dispositif selon l'une quelconque des revendication 2 à 5, caractérisé en ce qu'il comporte
- un bloc de maintien des parties en mouvement du carrousel,
- un socle pour poser le dispositif et pour maintenir le bloc, et
- un dispositif de rapprochement pour déplacer le bloc dans le socle et rapprocher ce bloc du produit qui défile.

7. Dispositif selon la revendication 6, caractérisé en ce que le bloc comporte
- deux plaques maintenues parallèlement l'une par rapport à l'autre par des entretoises,
- au moins deux poulies crantées montées libres en rotation entre ces deux plaques,
- au moins une courroie crantée entraînée par une poulie motrice et entraînant les jalons,
- un moteur entraînant la poulie motrice.

8. Dispositif selon l'une quelconque des revendications 6 ou 7, caractérisé en ce que le socle comporte
- un train de galets pour soutenir le produit en défilement pendant son défilement devant le dispositif.

9. Dispositif selon l'une quelconque des revendications 2 à 8, caractérisé en ce que le carrousel comporte au moins trois jalons.

10. Dispositif selon l'une quelconque des revendications 1 à 9, caractérisé en ce que le chronomètre comporte une horloge d'un microprocesseur qui effectue par ailleurs la conversion de mesure.

11. Dispositif selon l'une quelconque des revendications 2 à 10, caractérisé en ce que la distance qui sépare les jalons sur le carrousel est sensiblement égale à la distance qui sépare les bornes, de préférence sensiblement supérieure.

12. Dispositif selon l'une quelconque des revendications 7 à 11, caractérisé en ce que la longueur de la courroie est un multiple entier de la circonférence de la roue d'attaque.

## Patentansprüche

1. Längenmeßeinrichtung für langgestreckte sich bewegende Objekte, dadurch gekennzeichnet, daß es aufweist:
- eine Anordnung zum Antrieb von gegenüber dem Objekt angeordneten Markierungen mit im wesentlichen der Geschwindigkeit des Objekts,
- ein Paar Anschlüsse,
- einen Zeitmesser zur Erfassung der Vorbeilaufzeiten der Markierungen vor den Anschlüssen und
- eine Wandleranordnung zur Umwandlung der Messung der Zeitdauer zwischen den Vorbeiläufen der Markierungen an den Anschlüssen in eine Messung der Länge des sich bewegenden Objektes.

2. Einrichtung nach Anspruch 1, dadurch gekennzeichnet, daß
- die Antriebsanordnung eine motorisierte Förderanordnung aufweist,
- die Markierungen schwebend in der Förderanordnung gehalten sind und daß
- der Motor der Förderanordnung mit seiner Geschwindigkeit mit der Bewegungsgeschwindigkeit des Objektes gekoppelt ist.

3. Einrichtung nach Anspruch 2, dadurch gekennzeichnet, daß die schwebenden Markierungen jeweils einen an der Förderanordnung befestigten Träger aufweisen, wobei dieser Träger mit einem Gleitstück versehen ist, welches im Träger in einer Richtung parallel zur Bewegungsrichtung des Objektes gleitet und, elastisch im Gleitstück, eine Anzeigeanordnung. die elastisch bei Berührung mit dem sich bewegenden Objekt reagiert, wobei die Vorbeilaufzeiten der Anzeigeanordnung vor den Anschlüssen gemessen werden.

4. Einrichtung nach einem der Ansprüche 2 oder 3, dadurch gekennzeichnet, daß sie aufweist:
- eine Anordnung zur elastischen Lagerung der schwebenden Markierungen um eine Mittelstellung bezüglich der Förderanordnung.

5. Einrichtung nach einem der Ansprüche 2 bis 4, dadurch gekennzeichnet, daß die Steuerung des Motors der Förderanordnung eine Anordnung aufweist, die beim Start den Motor mittels einer tachymetrischen Erzeugenden durch Berührung und Antrieb durch das sich bewegende Objekt steuert, sowie eine Anordnung aufweist, um anschließend den Motor als Funktion einer Messung der Vorbeilaufgeschwindigkeit der schwebenden Markierungen zu steuern, die von der Zeitdauermessung abgeleitet ist.

6. Einrichtung nach einem der Ansprüche 2 bis 5, dadurch gekennzeichnet, daß sie aufweist
- einen Halteblock für die Bewegungsteile der Förderanordnung,
- einen Sockel zur Aufnahme der Einrichtung und zur Halterung des Blockes und
- eine Anordnung zur Annäherung, um den Block auf dem Sockel zu verschieben und den Block dem sich bewegenden Objekt anzunähern.

7. Einrichtung nach Anspruch 6, dadurch gekennzeichnet, daß der Block aufweist
- zwei mittels Streben parallel zueinander gehaltene Platten,
- wenigstens zwei frei drehbar zwischen diesen Platten angeordnete gerippte Antriebsrollen,
- wenigstens ein geripptes durch eine angetriebene Antriebsrolle angetriebenes Förderband zum Antrieb der Markierungen und
- einen die angetriebene Antriebsrolle antreibenden Motor.

8. Einrichtung nach einem der Ansprüche 6 oder 7, dadurch gekennzeichnet, daß der Sockel aufweist
- eine Vielzahl von Rollen zur Unterstützung des während seines Vorbeilaufs vor der Einrichtung vorbeilaufenden Objektes.

9. Einrichtung nach einem der Ansprüche 2 bis 8, dadurch gekennzeichnet, daß die Förderanordnung wenigstens drei Markierungen aufweist.

10. Einrichtung nach einem der Ansprüche 1 bis 9, dadurch gekennzeichnet, daß der Zeitmesser eine Uhr in einem Mikroprozessor aufweist, der außerdem die Meßumwandlungen durchführt.

11. Einrichtung nach einem der Ansprüche 2 bis 10, dadurch gekennzeichnet, daß der Abstand, welcher die Markierungen an der Förderanordnung trennt, im wesentlichen gleich dem Abstand ist, welcher die Anschlüsse trennt und vorzugsweise etwas größer ist.

12. Einrichtung nach einem der Ansprüche 7 bis 11, dadurch gekennzeichnet, daß die Länge der Förderanordnung ein ganzes Vielfaches des Umfangs des Antriebsrades ist.

## Claims

1. Length measuring device for elongated moving objects, characterised by the fact that it comprises
- a means for driving marker carriages opposite the moving object at approximately the speed at which the latter moves,
- a set of terminals,
- a chronometer to note data relating to the movement of these marker carriages past these termimals,
- and a converter device for converting a measurement of the time elapsing between the respective passages of these marker carriages in front of these terminals into a measurement of the length of the moving object.

2. Device according to Claim 1, characterised in that
- the driving means comprises a motorized roundabout,
- the marker carriages are mounted in a floating position in the roundabout, and
- the speed at the motor of the roundabout is governed by the speed at which the object moves past.

3. Device according to Claim 2, characterised in that the floating markers each comprise a carriage affixed to the roundabout, this carriage being equipped with a slide which performs in the carriage a movement parallel to the direction in which the object moves past, while a pointer flexibly mounted on this slide elastically contacts the moving object, the time occupied by the movement of the printers past the terminals being measured.

4. Device according to either of Claims 2, 3, characterised in that it comprises:
- means for elastically keeping the marker carriages in a floating position around an average position in relation to the roundabout.

5. Device according to any one of Claims 2 - 4, characterised in that the automatic control of the motor of the roundabout includes a device whereby this motor, on starting up, will be governed by a tachymetric generator in contact with and driven by the moving object, and a device by which this motor is then controlled in accordance with a measurement of the speed of passage of the floating marker carriages, this speed measurement being derived from the time measurement.

6. Device according to any one of Claims 2 - 5, characterised in that it comprises
- a securing block for the moving parts of the roundabout,
- a pedestal on which to stand the device and secure the block, and
- a positioning device for moving the block in the pedestal and moving this block closer to the object moving past.

7. Device according to Claim 6, characterised in that the block comprises
- two plates kept parallel to each other by struts,
- at least two notched pulleys mounted to rotate freely between these plates,
- at least one notched belt driven by a motor pulley and driving the marker carriages, a motor driving the motor pulley.

8. Device according to Claim 6 or 7, characterised in that the pedestal comprises
- a train of rollers to support the moving object during its passage in front of the device.

9. Device according to any one of Claims 2 - 8, characterised in that the roundabout comprises at least three marker carriages.

10. Device according to any one of Claims 1 - 9, characterised in that the chronometer comprises a clock of a microprocessor which also effects the measurement conversion.

11. Device according to any one of Claims 2 - 10, characterised in that the distance between the marker carriages on the roundabont is approximately equal to and preferably well above the distance between the terminals.

12. Device according to any one of Claims 7 - 11, characterised in that the length of the belt is a whole multiple of the circumferences of the driving wheel.
